# EUROPEAN PATENT SPECIFICATION

(11) **EP 2 362 497 B1**
(45) Date of publication and mention of the grant of the patent: **17.10.2012**
(21) Application number: 11000823.2
(22) Date of filing: 02.02.2011
(51) Int. Cl.: H01R 13/627, H01R 13/629, H01R 13/639

(54) **Charging connector**
Ladestecker
Connecteur d'alimentation

(30) Priority: 19.02.2010 JP 2010034832; 01.03.2010 JP 2010044208
(43) Date of publication of application: 31.08.2011
(73) Proprietor: Sumitomo Wiring Systems, Ltd., Yokkaichi-shi, Mie 510-8503 (JP)
(72) Inventor: Osawa, Kiyoshi, Yokkaichi-City MIE 510-8503 (JP); Ichio, Toshifumi, Yokkaichi-City MIE 510-8503 (JP); Takada, Akinori, Yokkaichi-City MIE 510-8503 (JP)
(74) Representative: Müller-Boré & Partner Patentanwälte

(56) References cited:
- DE-A1- 19 650 099
- DE-A1-102009 044 179
- JP-A- 2010 182 461
- US-B1- 6 371 768

## Description

The present invention relates to a charging connector connectable to a vehicle-side connector connected to a battery provided in a vehicle when the battery is charged.

A charging connector of this type is, for example, known from Japanese Unexamined Patent Publication No. H09-161882. This connector includes a connector fitting portion connectable to a vehicle-side connector, and this connector fitting portion is attached to a case body. The case body includes an opening which is open forward, and a front end portion of the connector fitting portion projects forward from the opening. The charging connector also includes a lever extending forward from the interior of the case body, and the charging connector and the vehicle-side connector are held connected by a lock portion provided at a front end portion of this lever. The lock portion is arranged near a middle position between the opening of the case body and the front end portion of the connector fitting portion. Further, a protective wall extends from the opening of the case body to the lock portion in such a manner as to cover the lever.

In such a charging connector, the entire length of the lever may be increased and the lock portion may be arranged at the front end portion of the connector fitting portion, for example, due to design reasons. In this case, even if the lock portion can be covered by the protective wall, it is more likely to interfere with a front end portion of the vehicle-side connector at the time of connection. Thus, the lock portion is subject to an impact. Further, when there is a protruding object on the ground, the lock portion is likely to collide with this protruding object if the charging connector is dropped by mistake at the time of separation. Thus, the lock portion is likewise subject to an impact. In this respect, the strength of the entire lock portion is weak in the above charging connector, wherefore an impact may be not borne.

The present invention was developed in view of the above situation and an object thereof is to improve an impact resistance performance of a lock portion.

This object is solved according to the invention by the features of the independent claim. Preferred embodiments of the invention are subject of the dependent claims.

According to the invention, there is provided a charging connector connectable to a vehicle-side connector connected to a battery in a vehicle when the battery is to be charged, comprising:
a connector fitting portion connectable to the vehicle-side connector,
a case body including an opening which is substantially open forward and adapted to at least partly accommodate the connector fitting portion therein in a state where a front end portion of the connector fitting portion substantially projects forward from the opening,
a lever including an arm adapted to hold the vehicle-side connector and the connector fitting portion in a connected state, and
at least one protective wall substantially extending forward from the opening of the case body in such a manner as to at least partly cover the arm from outside,
wherein a lock portion including a locking claw substantially projecting toward the connector fitting portion and at least one reinforcing projection projecting toward a side substantially opposite to the connector fitting portion is provided at or near a front end portion of the lever.

According to this construction, the strength of the entire lock portion can be increased since the lock portion is reinforced by the reinforcing projection. Thus, an impact resistance performance of the lock portion can be improved.

The present invention is preferably embodied to have the following constructions.

The arm may extend from the interior of the case body to the front end portion of the connector fitting portion.

The protective wall substantially may extend forward from the opening of the case body in such a manner as to at least partly cover the arm between the connector fitting portion and itself.

According to a further preferred embodiment, there is provided a charging connector connectable to a vehicle-side connector connected to a battery in a vehicle when the battery is charged, which may comprise:
a connector fitting portion connectable to the vehicle-side connector,
a case body including an opening which is open forward and adapted to accommodate the connector fitting portion therein in a state where a front end portion of the connector fitting portion projects forward from the opening,
a lever including an arm extending from the interior of the case body to the front end portion of the connector fitting portion and adapted to hold the vehicle-side connector and the connector fitting portion in a connected state, and
a protective wall extending forward from the opening of the case body in such a manner as to cover the arm between the connector fitting portion and itself,
wherein a lock portion including a locking claw projecting toward the connector fitting portion and a reinforcing projection projecting toward a side opposite to the connector fitting portion is provided at a front end portion of the lever.

The lock portion may be displaceable between a locking position where the lock portion and a lockable portion provided on the vehicle-side connector are in a locked state and an unlocking position where the locked state is canceled.

An outer edge of the reinforcing projection and that of the protective wall may be aligned to be flush with each other at the unlocking position.

It is thought as an adverse effect caused by providing the lock portion with the reinforcing projection that the reinforcing projection is more likely to interfere with other members. In this respect, according to the above construction, the outer edge of the reinforcing projection does not project out from that of the protective wall even when the lock portion is located at the unlocking position, wherefore the reinforcing projection can be made less likely to interfere with other members. When the lock portion is located at the locking position, the reinforcing projection can be made even less likely to interfere with other members since the outer edge of the reinforcing projection is retracted from that of the protective wall.

The lever at the locking position may be in contact with a shock absorbing member.

The lock portion may be substantially constantly biased toward the locking position by a biasing member.

When the unlocking portion is released at the unlocking position, the lever may swiftly move from the unlocking position towards or to the locking position due to a biasing force of the biasing member.

The protective wall may extend up to the front end of the lever in such a manner as to cover the reinforcing projection.

According to this construction, the reinforcing projection can be made less likely to interfere with other members since it can be covered by the protective wall.

A hole or recess, into which the reinforcing projection at least partly is fittable or insertable, may be formed in the protective wall.

The lever may be displaceable in a seesaw manner with a lever pivot portion arranged at an intermediate position of the arm as a pivot point.

According to the above, it is possible to improve an impact resistance performance of a lock portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a charging connector according to a first embodiment,
FIG. 2 is a front view showing the charging connector,
FIG. 3 is a side view partly in section showing a state before a locking projection and a lock projection are engaged,
FIG. 4 is a side view partly in section showing an intermediate state of engaging the locking projection and the lock projection,
FIG. 5 is a side view partly in section showing a locked state of the locking projection and the lock portion,
FIG. 6 is a section showing an internal structure of the charging connector when viewed sideways, and
FIG. 7 is a side view showing a charging connector according to a second embodiment.

### <First Embodiment>

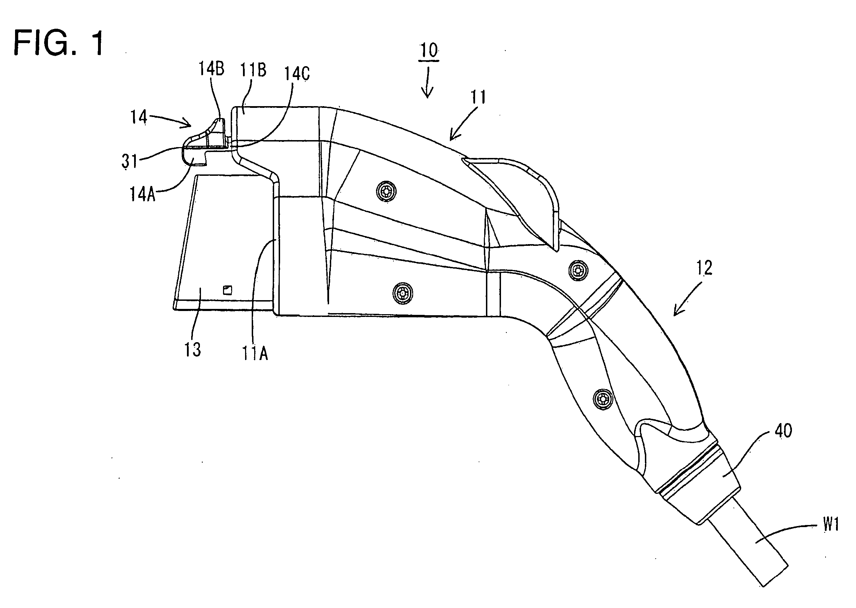

A first preferred embodiment of the present invention is described with reference to FIGS. 1 to 6. A charging connector 10 of this embodiment is particularly is connectable with a vehicle-side connector 50. It should be noted that in the following a front side or a forward direction is referred to a connection direction of the charging connector 10 with the vehicle-side connector 50. The charging connector 10 substantially gun-shaped as a whole and/or formed with a connector main body 11 constituting a front part (particularly substantially a front half) and a grip 12 substantially extending obliquely downward from a rear part of this connector main body 11 as shown in FIG. 1. The connector main body 11 and the grip 12 particularly are both made e.g. of synthetic resin and/or integrally or unitary molded or formed. A tubular connector fitting portion 13 projecting forward is provided on (particularly the front surface of) the connector main body 11. Further, a lever 14 is mounted on or to the connector main body 11 (particularly at least partly accommodated at an upper side of the interior of the connector main body 11), and a distal or front end portion thereof substantially projects forward from the front edge of the upper surface of the connector main body 11 to be exposed to the outside. Note that a "case body" may be embodied by the connector main body 11.

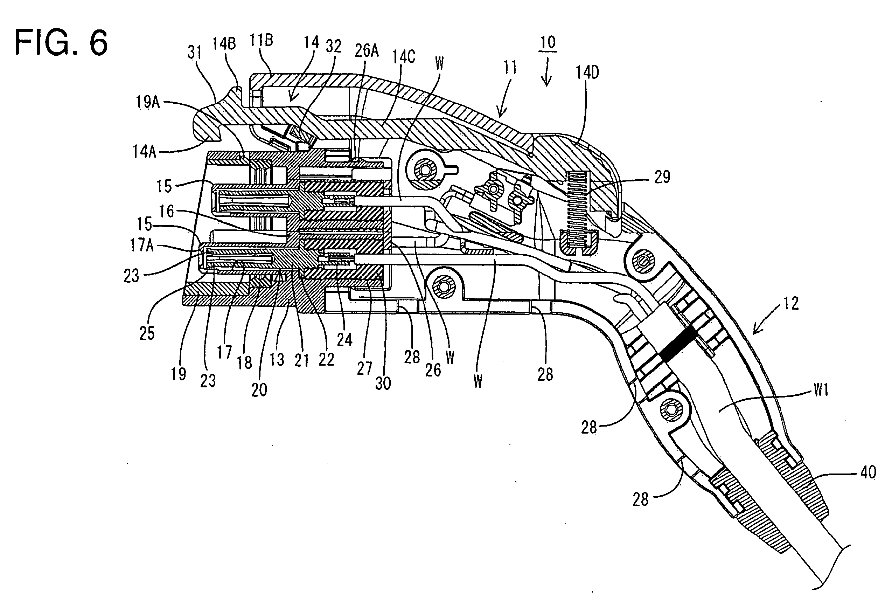

As shown in FIG. 6, the connector fitting portion 13 particularly is formed as a separate member from the connector main body 11, and to be fixed to the connector main body 11 by an unillustrated locking means. One or more, particularly a plurality of (particularly substantially cylindrical) terminal accommodating portions 15 are provided in the connector fitting portion 13. These one or more terminal accommodating portions 15 substantially project forward from a back wall 16 of the connector fitting portion 13. One or more cavities 17 for at least partly accommodating one or more terminal fittings 20 are formed in the terminal accommodating portions 15.

The (particularly each) cavity 17 is open at (particularly the rear surface of the back wall 16 of) the connector fitting portion 13. On the other hand, the terminal fitting 20 is at least partly insertable (particularly substantially forward) into the cavity 17 through a (particularly rear end) opening and prevented from moving any further (forward) by the contact of a flange portion 22 at least partly circumferentially provided on the outer circumferential surface of the terminal fitting 20 with the rear end opening edge of the cavity 17. An insertion hole, through which a vehicle-side terminal 60 to be described later is at least partly insertable, is formed to penetrate through a front wall 17A of the cavity 17. Further, at least one water drain hole 25 is formed to penetrate through a lower side of the front end of the inner wall of the cavity 17. Water having entered the cavity 17 is or may be drained to the outside through the at least one water drain hole 25.

A cylindrical rubber ring 18 (as a preferred resilient ring) is mounted along the inner circumferential surface of the connector fitting portion 13 in the connector fitting portion 13, and a holder 19 for retaining the rubber ring 18 is mounted before the rubber ring 18. The holder 19 at least partly has the substantially same cylindrical shape as the rubber ring 18 and includes at lest one locking portion 19A engageable with the inner side of the connector fitting portion 13. The holder 19 is to be substantially mounted along the inner circumferential surface of the connector fitting portion 13 by this locking portion 19A.

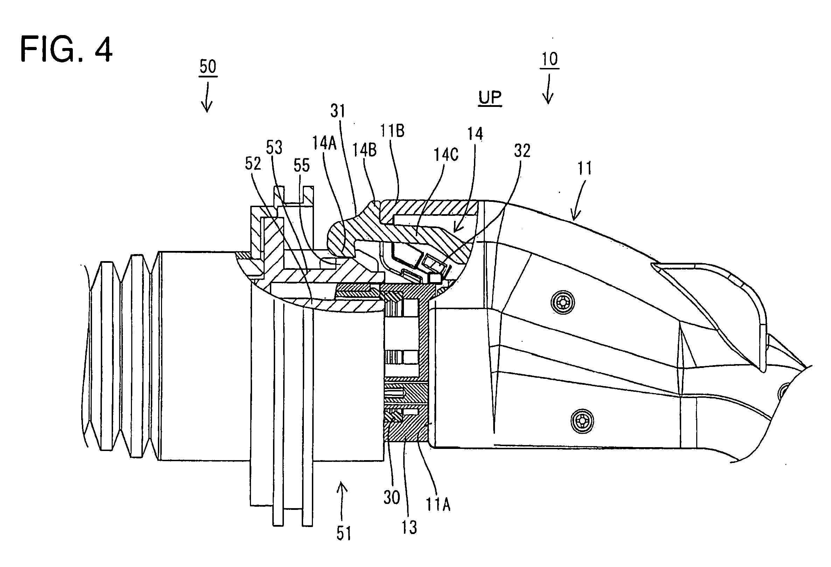

A mounting portion for the holder 19 on the inner circumferential surface of the connector fitting portion 13 particularly has a larger diameter than the back side of the holder 19. By mounting the holder 19, the inner circumferential surface of the holder 19 and the inner circumferential surface of the connector fitting portion 13 substantially behind the rubber ring 18 are aligned to be substantially flush. One or more lip portions of the rubber ring 18 project radially inwardly of the inner circumferential surface of the holder 19. On the other hand, the vehicle-side connector 50 includes a housing 51 connectable to the charging connector 10 as shown in FIG. 4. The housing 51 particularly is made of synthetic resin and/or includes a housing main body 52 at least partly fittable into the connector fitting portion 13. Thus, when the housing main body 52 is or may be at least partly fitted into the connector fitting portion 13, the outer circumferential surface thereof comes into close contact with (particularly the lip portions of) the rubber ring 18, thereby providing waterproofing between the two connectors 10 and 50.

A fitting tube portion 53 is circumferentially provided on the outer circumferential surface of the housing main body 52. This fitting tube portion 53 projects substantially forward from a mounting plate 54, so that the connector fitting portion 13 is at least partly fittable between the housing main body 52 and the fitting tube portion 53. At least one lock projection 56 is provided on (particularly the upper surface of) the fitting tube portion 53. This lock projection 56 is engageable substantially in a connecting direction with a lock portion 31 provided at or near (particularly a front end portion of) the lever 14. Accordingly, when the two connectors 10, 50 are connected, the lock portion 31 is engaged with the lock projection 56, whereby the two connectors 10, 50 are held in a connected state. Note that the mounting plate 54 is to be placed on a mounting opening portion 56 provided on a vehicle body and fixed (particularly bolted), and a (particularly substantially bellows-like) grommet 57 substantially extending backward is mounted on (particularly a rear part of) the mounting opening portion 56.

The (particularly each) terminal fitting 20 includes a terminal main body 21 with one or more, particularly a plurality of contact pieces 23. The plurality of contact pieces 23 particularly are formed by forming one or more, particularly a plurality of slits intermittently in a circumferential direction. The slits are formed to extend backward from the front end opening edge of the terminal main body 21 having an open front end. The terminal of this type is called a slotted terminal or the like in some cases.

A wire connection portion (particularly comprising a cylindrical barrel portion 24 having an open rear end) is formed adjacent to or substantially behind the terminal main body 21. An exposed core at an end of a wire W is to be connected to the wire connection portion particularly by being at least partly accommodated in the barrel portion 21. By particularly crimping or bending or folding the barrel portion 24, the core of the wire W is electrically conductively connected to wire connection portion or the barrel portion 24. The wire W substantially extends backward from the barrel portion 24 and is to be drawn out to the outside through the interiors of the connector main body 11 and the grip 12.

One or more rubber plugs 30 (as preferred resilient plugs) are at least partly accommodated behind the flange portions 22, and a back retainer 26 for retaining these one or more rubber plugs 30 particularly is provided. The (particularly each) rubber plug 30 is at least partly accommodated in a rubber-plug accommodating portion 27 arranged behind and/or coaxially with the terminal accommodating portion 15. The back retainer 26 includes one or more locking pieces 26A engageable with one or more projections formed on the upper surfaces of the rubber-plug accommodating portions 27. A backward movement of the back retainer 26 and backward movements of the rubber plugs 30 and the flange portions 22 are prevented by these locking pieces 26A.

One or more, particularly a plurality of wires W substantially extend backward in the connector main body 11 substantially in correspondence with one or more, particularly a plurality of terminal fittings 20, and these wires W particularly are bundled into one cable W1 by being covered by an outer sheath particularly in the grip 12. The cable W1 is fixed by a cable grip ring, clip, band (not shown) or the like in the grip 12 and further fixed by a bush 40 particularly at or near a rear end portion of the grip 12.

Since the bush 40 is held substantially in close contact with the inner circumferential surface of the rear end opening of the grip 12 and the outer circumferential surface of the cable W1, water is prevented from entering the interior of the grip 12 through the rear end of the grip 12. Since one or more, particularly a plurality of water drain holes 28 are formed in or near the lower surfaces of the connector main body 11 and the grip 12, water can be allowed to escape to the outside through these water drain holes 28 even if it enters the interiors of the connector main body 11 and the grip 12.

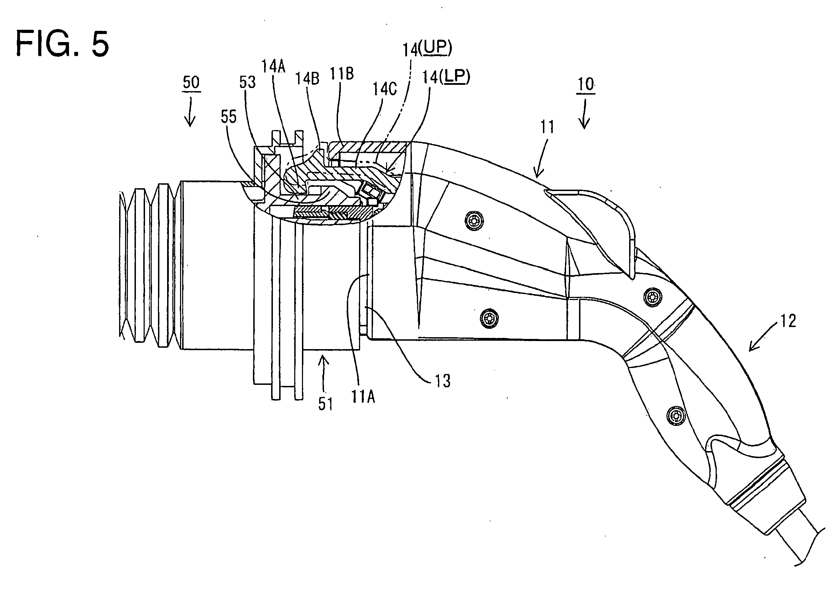

The lever 14 includes an arm 14C substantially extending in forward and backward directions, and an unlocking portion 14D is provided at or near a rear end portion of the arm 14C. A lever pivot portion (not shown) is provided substantially in an intermediate part (particularly substantially a central part) of the arm 14C, and the arm 14C can be inclined or displaced in a seesaw manner with this lever pivot portion as a center or pivot point to bring both front and rear ends of the arm 14C substantially upward and downward. A coil spring 29 (as a particular biasing member) is mounted in a compressed state below the unlocking portion 14D. This coil spring 29 pushes up or biases a rear end portion of the arm 14C, whereby the lock portion 31 particularly substantially is constantly biased toward a locking position LP shown by solid line in FIG. 5. On the other hand, when the unlocking portion 14D is pushed down or displaced, the lock portion 31 is relatively pushed up to be displaced towards or to an unlocking position UP shown by chain double-dashed line in FIG. 5.

As shown in FIG. 5, the lever 14 at the locking position LP is in contact with a shock absorbing pad 32 provided at a position substantially corresponding to an opening 11 A of the connector main body 11 in the connector main body 11. Thus, when the unlocking portion 14D is released at the unlocking position UP, the lever 14 swiftly moves from the unlocking position UP towards or to the locking position LP due to a biasing or spring force of the coil spring 29, but an impact is absorbed when the arm 14C collides with the shock absorbing pad 32 and a movement of the lever 14 substantially is stopped at the locking position LP.

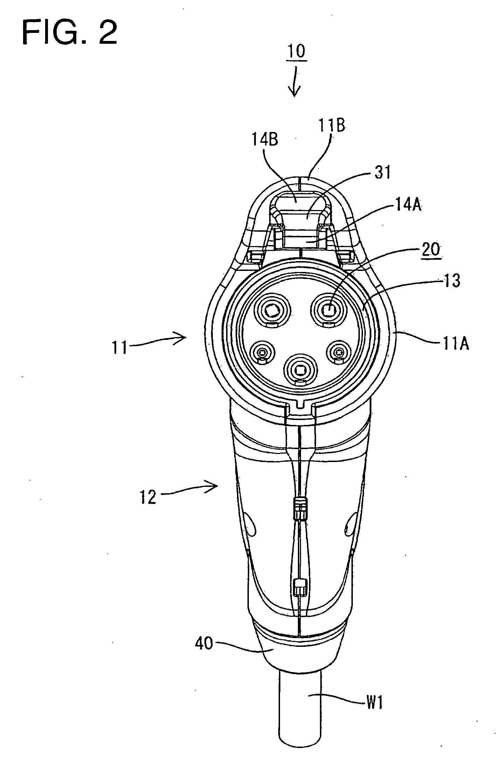

As shown in FIG. 5, the opening 11 A of the connector main body 11 is arranged to substantially face the opening edge of the fitting tube portion 53 with the two connectors 10, 50 connected. The connector main body 11 is formed to bulge outward or upward at a position substantially corresponding to the lever 14 as shown in FIG. 2, and a protective wall 11 B is formed at or near (particularly a front end portion of) this bulging portion. As shown in FIG. 1, the protective wall 11 B projects substantially forward from the opening 11 A. Thus, the arm 14C of the lever 14 is arranged between the upper or outer surface of the connector fitting portion 13 and the protective wall 11 B and/or protected by being at least partly covered by the protective wall 11 B.

The lock portion 31 provided at (particularly the front end portion of) the lever 14 is composed of or comprises a locking projection 14A projecting at an angle different from 0° or 180°, preferably substantially normal or downward and/or a reinforcing projection 14B projecting in a direction substantially opposite that of the locking projection 14A, particularly substantially upward or outward. Thus, the lock portion 31 is formed to be thicker than the arm 14C and have higher strength than a lock portion including no reinforcing projection 14B. As shown in FIG. 4, the upper or outer edge of the reinforcing projection 14B preferably substantially is aligned to be flush with that of the protective wall 11 B when the lever 14 is at the unlocking position UP. This means that the upper or distal or outer edge of the reinforcing projection 14B does not project from the upper or distal or outer edge of the protective wall 11 B even when the lock portion 31 is located at a highest or most-outward position, i.e. at the unlocking position UP. In this way, interference of the reinforcing projection 14B with other members can be avoided.

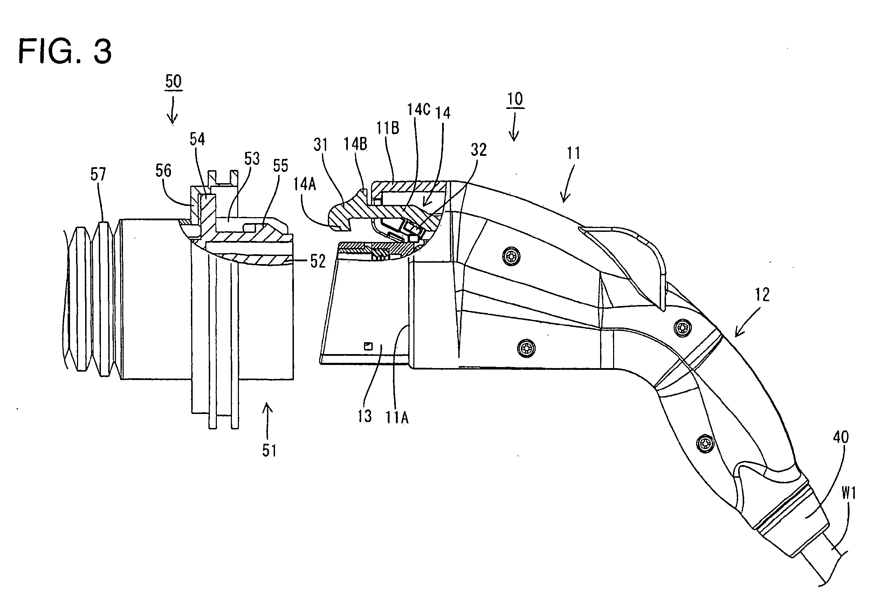

The construction as described above can display the following functions and effects. When the two connectors 10, 50 are connected in a state of FIG. 3, the locking projection 14A of the lock portion 31 moves onto the lock projection 55 and the lever 14 substantially reaches the unlocking position UP as shown in FIG. 4. When the two connectors 10, 50 are further connected, they reach a connected state. Simultaneously with this, the locking projection 14A moves beyond the lock projection 55, the lever 14 resiliently at least partly returns towards or to the locking position LP and the locking projection 14A and the lock projection 55 are engaged in the connecting direction. In this way, the two connectors 10, 50 are locked in the connected state. Further, when the unlocking portion 14D is pushed, the lever 14 is inclined towards or to the unlocking position UP to disengage the locking projection 14A and the lock projection 55, and the two connectors 10, 50 can be separated by being pulled apart from each other.

As described above, the lock portion 31 may be brought into collision with the opening edge of the fitting tube portion 53 by mistake, for example, when the charging connector 10 is connected to the vehicle-side connector 50 at the time of charging. According to this embodiment, even in such a case, damage of the lock portion 31 can be prevented since the lock portion 31 is reinforced by the reinforcing projection 14B. Further, the charging connector 10 may be dropped by mistake when no charging is performed. In this case, the lock portion 31 collides with the ground to be subject to an impact. However, since the lock portion 31 is reinforced by the reinforcing projection 14B, damage of the lock portion 31 can be prevented. Therefore, an impact resistance performance of the lock portion 31 can be improved.

Accordingly, to improve an impact resistance performance of a lock portion, a charging connector 10 is provided with a connector fitting portion 13 connectable to a vehicle-side connector 50, a connector main body 11 including an opening 11A which is open forward and adapted to accommodate the connector fitting portion 13 therein in a state where a front end portion of the connector fitting portion 13 substantially projects forward from the opening 11A, a lever 14 including an arm 14C extending from the interior of the connector main body 11 towards or to the front end portion of the connector fitting portion 13 and adapted to hold the vehicle-side connector 50 and the connector fitting portion 13 in a connected state, and a protective wall 11B substantially extending forward from the opening 11 A of the connector main body 11 in such a manner as to at least partly cover the arm 14C from outside, particularly substantially between the connector fitting portion 13 and itself. A lock portion 31 including a locking projection 14A projecting toward the connector fitting portion 13 and a reinforcing projection 14B projecting toward a side opposite to the connector fitting portion 13 is provided at the lever 14, particularly at or near a front end portion of the lever 14.

### <Second Embodiment>

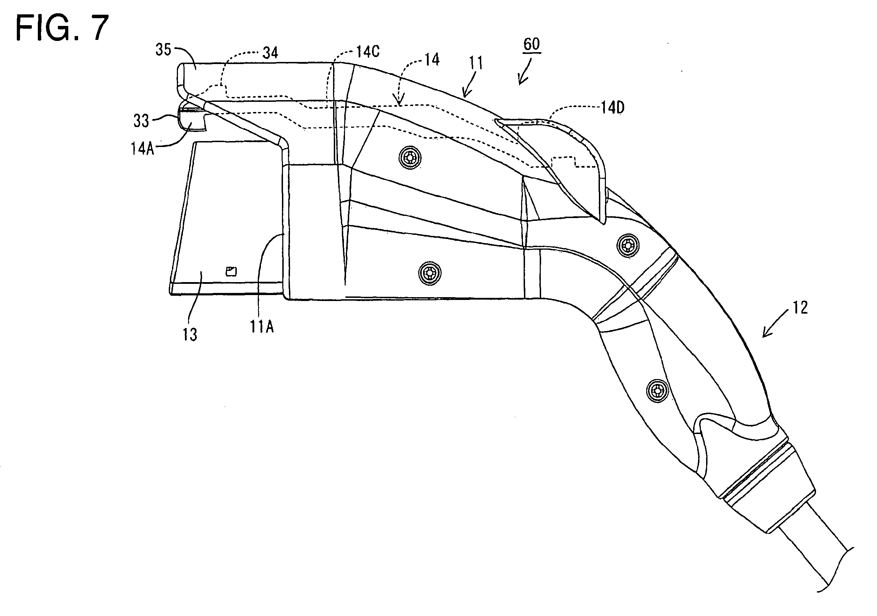

Next, a second particular embodiment of the present invention is described with reference to FIG. 7. A charging connector 60 of the second embodiment differs from the first embodiment in the constructions of the lock portion 31 and/or the protective wall 11B, and the other constructions, functions and effects thereof are not described since being similar or substantially same to those of the first embodiment. The similar or substantially same constructions as in the first embodiment are identified by the same reference numerals.

Specifically, in the charging connector 60 of this embodiment, a projecting height of a reinforcing projection 34 of a lock portion 33 particularly is lower than that of the reinforcing projection 14B of the first embodiment as shown in FIG. 7. A protective wall 35 is arranged in a space formed by lowering the reinforcing projection 34. In other words, the protective wall 35 particularly extends from an opening 11A of a connector main body 11 substantially to the front end of a lever 14 and at least partly covers both an arm 14C and the lock portion 33. Accordingly, the lock portion 33 is less likely to collide with other members than in the first embodiment. When a protruding object is present on the ground, even if a charging connector 10 should be dropped by mistake and the lock portion 33 should collide with the protruding object, damage of the lock portion 33 can be avoided since the lock portion 33 is reinforced by the reinforcing projection 34.

### <Other Embodiments>

The present invention is not limited to the above described and illustrated embodiments. For example, the following embodiments are also included in the scope of the present invention as defined by the appended claims.
(1) Although the grip 12 is provided in the above embodiments, a charging connector may include no grip according to the present invention.
(2) Although the protective wall 11 B covers only the arm 14C in the first embodiment, the protective wall may be formed to substantially extend up to the front end of the lever 14, particularly a hole or recess, into which the reinforcing projection 14B at least partly is fittable or insertable (or into which the reinforcing projection 14B can escape), may be formed in this protective wall, and/or the upper edge of the reinforcing projection 14B and that of the protective wall substantially may be aligned to be flush with each other by the reinforcing projection 14B being fitted into this hole according to the present invention.

### LIST OF REFERENCE NUMERALS

- 10: charging connector
- 11: connector main body (case body)
- 11 A: opening
- 11 B: protective wall
- 13: connector fitting portion
- 14: lever
- 14A: locking projection (locking claw)
- 14B: reinforcing projection
- 14C: arm
- 31: lock portion
- 33: lock portion
- 34: reinforcing projection
- 35: protective wall
- 50: vehicle-side connector
- 55: lock projection (lockable portion)
- 60: charging connector

## Claims

1. A charging connector (10; 60) connectable to a vehicle-side connector (50) connected to a battery in a vehicle when the battery is to be charged, comprising:
a connector fitting portion (13) connectable to the vehicle-side connector (50),
a case body (11) including an opening (11 A) which is substantially open forward and adapted to at least partly accommodate the connector fitting portion (13) therein in a state where a front end portion of the connector fitting portion (13) substantially projects forward from the opening (11A),
a lever (14) including an arm (14C) adapted to hold the vehicle-side connector (50) and the connector fitting portion (13) in a connected state, and
at least one protective wall (11 B; 35) substantially extending forward from the opening of the case body (11) in such a manner as to at least partly cover the arm (14C) from outside,
wherein a lock portion (31; 33) including a locking claw (14A) substantially projecting toward the connector fitting portion (13) and at least one reinforcing projection (14B; 34) projecting in a direction substantially opposite that of the locking claw (14a) is provided at or near a front end portion of the lever (14).

2. A charging connector according to claim 1, wherein the arm (14C) extends from the interior of the case body (11) to the front end portion of the connector fitting portion (13).

3. A charging connector according to any one of the preceding claims, wherein the protective wall (11 B; 35) substantially extends forward from the opening of the case body (11) in such a manner as to at least partly cover the arm (14C) between the connector fitting portion (13) and itself.

4. A charging connector according to any one of the preceding claims, wherein the lock portion (31; 33) is displaceable between a locking position (LP) where the lock portion (31; 33) and a lockable portion (55) provided on the vehicle-side connector (50) are in a locked state and an unlocking position (UP) where the locked state is canceled.

5. A charging connector according to claim 4, wherein an outer edge of the reinforcing projection (14B) and that of the protective wall (11B) are aligned to be flush with each other at the unlocking position (UP).

6. A charging connector according to claim 4 or 5, wherein the lever (14) at the locking position (LP) is in contact with a shock absorbing member (32).

7. A charging connector according to claim 4, 5 or 6, wherein the lock portion (31) is substantially constantly biased toward the locking position (LP) by a biasing member (29).

8. A charging connector according to claim 7, wherein when the unlocking portion (14D) is released at the unlocking position (UP), the lever (14) swiftly moves from the unlocking position (UP) towards or to the locking position (LP) due to a biasing force of the biasing member (29).

9. A charging connector according to any one of the preceding claims, wherein the protective wall (11 B; 35) extends up to the front end of the lever (14) in such a manner as to cover the reinforcing projection (14B; 34).

10. A charging connector according to claim 9, wherein a hole or recess, into which the reinforcing projection (14B; 34) at least partly is fittable or insertable, is formed in the protective wall (11 B; 35).

11. A charging connector according to any one of the preceding claims, wherein the lever (14) is displaceable in a seesaw manner with a lever pivot portion arranged at an intermediate position of the arm (14C) as a pivot point.

## Patentansprüche

1. Ladeverbinder (10; 60), der mit einem fahrzeugseitigen Verbinder (50) verbindbar ist, der mit einer Batterie in einem Fahrzeug verbunden ist, wenn die Batterie zu laden ist, umfassend:
einen Verbinderpassabschnitt (13), der mit dem fahrzeugseitigen Verbinder (50) verbindbar ist,
einen Gehäuse- bzw. Ummantelungskörper (11), der eine Öffnung (11A) enthält, die im Wesentlichen nach vorne offen ist und angepasst ist, den Verbinderpassabschnitt (13) zumindest teilweise in einem Zustand darin aufzunehmen, wo ein vorderer Endabschnitt des Verbinderpassabschnitts (13) im Wesentlichen von der Öffnung (11A) nach vorne ragt,
einen Hebel (14), der einen Arm (14C) enthält, der angepasst ist, den fahrzeugseitigen Verbinder (50) und den Verbinderpassabschnitt (13) in einem verbundenen Zustand zu halten, und
zumindest eine Schutzwand (11 B; 35), die sich von der Öffnung des Gehäuse- bzw. Ummantelungskörpers (11) auf eine solche Weise im Wesentlichen nach vorne erstreckt, dass sie den Arm (14C) von außen zumindest teilweise abdeckt bzw. bedeckt,
wobei ein Verriegelungsabschnitt (31; 33), der eine Verriegelungsklaue bzw. -kralle (14A), die im Wesentlichen zu dem Verbinderpassabschnitt (13) hin ragt, und zumindest einen Verstärkungsvorsprung (14B; 34) enthält, der in einer Richtung im Wesentlichen entgegengesetzt zu derjenigen der Verriegelungsklaue bzw. -kralle (14A) ragt bzw. vorspringt, an einem oder nahe eines vorderen Endabschnitts des Hebels (14) vorgesehen ist.

2. Ladeverbinder nach Anspruch 1, wobei sich der Arm (14C) von dem Inneren des Gehäusekörpers (11) zu dem vorderen Endabschnitt des Verbinderpassabschnitts (13) erstreckt.

3. Ladeverbinder nach einem der vorhergehenden Ansprüche, wobei sich die Schutzwand (11 B; 35) von der Öffnung des Gehäusekörpers (11) auf eine solche Weise im Wesentlichen nach vorne erstreckt, dass sie den Armabschnitt (14C) zwischen dem Verbinderpassabschnitt (13) und sich selbst zumindest teilweise abdeckt bzw. bedeckt.

4. Ladeverbinder nach einem der vorhergehenden Ansprüche, wobei der Verriegelungsabschnitt (31; 33) zwischen einer Verriegelungsposition (LP), wo der Verriegelungsabschnitt (31; 33) und ein verriegelbarer Abschnitt (55), der an bzw. auf dem fahrzeugseitigen Verbinder (50) vorgesehen ist, in einem verriegelten Zustand sind, und einer Entriegelungsposition (UP) verlagerbar ist, wo der verriegelte Zustand aufgehoben ist bzw. wird.

5. Ladeverbinder nach Anspruch 4, wobei eine äußere Kante bzw. Rand des Verstärkungsvorsprungs (14B) und die- bzw. derjenige der Schutzwand (11 B) so ausgerichtet sind, dass sie an der Entriegelungsposition (UP) miteinander bündig sind.

6. Ladeverbinder nach Anspruch 4 oder 5, wobei der Hebel (14) an der Verriegelungsposition (LP) mit einem stoßdämpfenden Glied (32) in Kontakt ist.

7. Ladeverbinder nach Anspruch 4, 5 oder 6, wobei der Verriegelungsabschnitt (31) im Wesentlichen konstant zu der Verriegelungsposition (LP) durch ein Vorspannglied (29) vorgespannt ist.

8. Ladeverbinder nach Anspruch 7, wobei, wenn der Entriegelungsabschnitt (14D) an der Entriegelungsposition (UP) gelöst ist bzw. wird, sich der Hebel (14) auf Grund einer Vorspannkraft des Vorspannglieds (29) schnell aus der Entriegelungsposition (UP) zu der oder in die Verriegelungsposition (LP) bewegt

9. Ladeverbinder nach einem der vorhergehenden Ansprüche, wobei sich die Schutzwand (11 B; 35) bis zu dem vorderen Ende des Hebels (14) auf eine solche Weise erstreckt, dass sie den Verstärkungsvorsprung (14B; 34) abdeckt bzw. bedeckt.

10. Ladeverbinder nach Anspruch 9, wobei ein Loch oder eine Aussparung, in das bzw. die der Verstärkungsvorsprung (14B; 34) zumindest teilweise einpassbar oder einsetzbar ist, in der Schutzwand (11 B; 35) gebildet ist.

11. Ladeverbinder nach einem der vorhergehenden Ansprüche, wobei der Hebel (14) auf eine wippende bzw. schaukelnde Weise mit einem Hebelschwenkabschnitt verlagerbar ist, der an einer Zwischenposition des Arms (14C) als ein Gelenk- bzw. Schwenkpunkt angeordnet ist.

## Revendications

1. Connecteur de chargement (10 ; 60) pouvant être connecté à un connecteur côté véhicule (50) connecté à une batterie dans un véhicule lorsque la batterie doit être chargée, comprenant :
une portion d'ajustement de connecteur (13) pouvant être connectée au connecteur côté véhicule (50),
un corps de coffret (11) incluant une ouverture (11A) qui est essentiellement ouverte vers l'avant et adaptée à recevoir au moins partiellement la portion d'ajustement de connecteur (13) en son sein dans un état où une portion d'extrémité avant de la portion d'ajustement de connecteur (13) fait essentiellement saillie vers l'avant depuis l'ouverture (11A),
un levier (14) incluant un bras (14C) adapté à maintenir le connecteur côté véhicule (50) et la portion d'ajustement de connecteur (13) dans un état connecté, et
au moins une paroi protectrice (11B ; 35) s'étendant essentiellement vers l'avant depuis l'ouverture du corps de coffret (11) de manière à recouvrir au moins partiellement le bras (14C) de l'extérieur,
dans lequel une portion de verrou (31 ; 33) incluant une griffe de verrouillage (14A) faisant essentiellement saillie vers la portion d'ajustement de connecteur (13) et au moins une saillie de renforcement (14B ; 34) faisant saillie dans une direction essentiellement opposée à celle de la griffe de verrouillage (14A) est prévue au niveau ou près d'une portion d'extrémité avant du levier (14).

2. Connecteur de chargement selon la revendication 1, dans lequel le bras (14C) s'étend de l'intérieur du corps de coffret (11) à la portion d'extrémité avant de la portion d'ajustement de connecteur (13).

3. Connecteur de chargement selon l'une quelconque des revendications précédentes, dans lequel la paroi protectrice (11B ; 35) s'étend essentiellement vers l'avant depuis l'ouverture du corps de coffret (11) de manière à recouvrir au moins partiellement le bras (14C) entre la portion d'ajustement de connecteur (13) et elle-même.

4. Connecteur de chargement selon l'une quelconque des revendications précédentes, dans lequel la portion de verrou (31 ; 33) est déplaçable entre une position de verrouillage (LP) où la portion de verrou (31 ; 33) et une portion verrouillable (55) prévue sur le connecteur côté véhicule (50) sont dans un état verrouillé et une position de déverrouillage (UP) où l'état verrouillé est annulé.

5. Connecteur de chargement selon la revendication 4, dans lequel un bord externe de la saillie de renforcement (14B) et celui de la paroi protectrice (11B) sont alignés pour être à fleur l'un avec l'autre dans la position de déverrouillage (UP).

6. Connecteur de chargement selon la revendication 4 ou 5, dans lequel le levier (14) dans la position de verrouillage (LP) est en contact avec un élément absorbeur de chocs (32).

7. Connecteur de chargement selon la revendication 4, 5 ou 6, dans lequel la portion de verrou (31) est essentiellement constamment inclinée vers la position de verrouillage (LP) par un élément d'inclinaison (29).

8. Connecteur de chargement selon la revendication 7, dans lequel, lorsque la portion de déverrouillage (14D) est libérée dans la position de déverrouillage (UP), le levier (14) se déplace rapidement de la position de déverrouillage (UP) vers ou dans la position de verrouillage (LP) en raison d'une force d'inclinaison de l'élément d'inclinaison (29).

9. Connecteur de chargement selon l'une quelconque des revendications précédentes, dans lequel la paroi protectrice (11B ; 35) s'étend jusqu'à l'extrémité avant du levier (14) de manière à recouvrir la saillie de renforcement (14B ; 34).

10. Connecteur de chargement selon la revendication 9, dans lequel un orifice ou creux dans lequel la saillie de renforcement (14B ; 34) peut être au moins partiellement ajustée ou insérée, est formé dans la paroi protectrice (11B ; 35).

11. Connecteur de chargement selon l'une quelconque des revendications précédentes, dans lequel le levier (14) est déplaçable à la manière d'une bascule avec une portion de pivot de levier agencée en une position intermédiaire du bras (14C) en tant que point de pivot.
